# EUROPEAN PATENT APPLICATION

(11) **EP 2 006 944 A2**
(43) Date of publication of application: **24.12.2008**
(21) Application number: 07740525.6
(22) Date of filing: 30.03.2007
(51) Int. Cl.: H01M 8/02, H01M 8/12

(54) **SOLID OXIDE FUEL CELL**

(30) Priority: 31.03.2006 JP 2006098399
(71) Applicant: Mitsubishi Materials Corporation, Tokyo 100-0004 (JP); THE KANSAI ELECTRIC POWER CO., INC., Osaka-shi, Osaka 530-8270 (JP)
(72) Inventor: YAMADA, Takashi, Naka-shi Ibaraki 311-0102 (JP)
(74) Representative: Klingseisen, Franz
(86) International application number: PCT/JP2007/057089
(87) International publication number: WO 2007/116822

(57) **Abstract**

The present invention is directed to a long-life solid oxide fuel cell in which excellent electric conductivity can be maintained between power generation cells even in a long-term use. A protective plate (20) composed of Ni or Cu is joined to a surface of a metal separator (8) on the side of a fuel electrode layer (3) by diffusion joining. Since a fuel gas does not intrude into the joined portion between both the members, and Ni and Cu are significantly excellent in high temperature oxidation resistance, the separator (8) is surely protected from the fuel electrode atmosphere by the protective plate (20), and growth of a high temperature oxidation coating is blocked. Consequently, excellent electric conductivity can be maintained in a long-term use.

## Description

### Technical Field

The present invention relates to a flat plate stacked type solid oxide fuel cell in which a plurality of power generation cells are connected via separators, and more particularly to a solid oxide fuel cell in which the high temperature oxidation resistance of the separator is improved.

### Background Art

The above described solid oxide fuel cell has been attracting attention as a third generation fuel cell for power generation. At present, as the solid oxide fuel cell, there are proposed three types: a cylindrical type, a monolithic type, and a flat plate stacked type. Any type of the solid oxide fuel cells has a laminated structure in which a solid electrolyte formed of an oxide ion conductor is sandwiched between an air electrode layer and a fuel electrode layer. Further, the solid oxide fuel cell is configured in such a way that a plurality of power generation cells consisting of the laminated body and a plurality of separators are alternately laminated through a fuel electrode current collector or an air electrode current collector to form a stack structure.

In the solid oxide fuel cell, oxygen (air) as oxidant gas is supplied to the air electrode layer side of the power generation cell, and fuel gas (H₂, CO, CH₄, and the like) is supplied to the fuel electrode layer side. Both the air electrode layer and the fuel electrode layer are made porous so as to enable the gas to reach their boundary surface with the solid electrolyte layer. The oxygen supplied to the air electrode layer side reaches near the boundary surface with the solid electrolyte layer through the pore in the air electrode layer, and there, the oxygen receives an electron from the air electrode layer to be ionized to oxide ion (O²⁻). The oxide ion is diffusively moved in the solid electrolyte layer toward the direction of the fuel electrode layer. When reaching near the boundary surface with the fuel electrode layer, the oxide ions react there with the fuel gas to produce a reaction gas (exhaust gas), such as H₂O and CO₂, and emits electrons to the fuel electrode layer. The electrons can be taken out as an electromotive force by an external circuit to another route.

In the flat plate stacked type solid oxide fuel cell, the separator has a function of supplying reactive gas to the power generation cell and of electrically connecting the power generation cells to each other. Thus, the separator is required to have excellent electric conductivity, and hence a heat-resistant alloy, such as stainless steel, is usually used as a base material of the separator.

However, the metal separator is used at a high temperature of 700 to 1000°C of the fuel cell operating temperature. Thus, during a long period of use, a film mainly made of the base material, for example, a film made of chromium oxide and the like, is formed on the metal surface. This results in a problem that the contact resistance between the separator and the current collector is increased according to the growth of the film, and that the electrical connecting function between the power generation cells is thereby deteriorated.
This phenomenon is remarkable in particular on the fuel electrode side of the separator. The increase in the resistance due to the oxide film significantly influences the performance and life of the cell.

In order to prevent the formation and growth of the oxide film, and to secure the excellent electric conductivity, it is common practice to form, on the surface of the separator, a metallic protective film which is made of Ni, or the like, and which is excellent in high temperature oxidation resistance. The technique is disclosed as the prior art, for example, in Patent Documents 1 and 2.

In the above-described disclosed techniques, Patent Document 1 discloses a metal separator which is formed of a heat-resistant alloy, and in which an Ni plating layer is provided on the fuel electrode surface side of the separator and an LaCrO₃ based plating layer is provided on the air electrode surface side, and Patent Document 2 discloses a metal separator in which mixed powder made of conductive ceramic powder and metal powder is plasma-sprayed on a heat-resistant alloy.

However, in the disclosed techniques, in any of which the plating method and the plasma spray method are used for forming the metal protective film, it is thus difficult to increase the thickness of the protective film. This results in a problem that during a long period of use, the protective film on the metal surface is absorbed in the base material by mutual diffusion, and that the base material is thereby exposed on the surface. In addition, the cost for forming the protective film by the plating and the plasma spray coating is high.
Patent Document 1: Japanese Patent Laid-Open No. 5-36425
Patent Document 2: Japanese Patent Laid-Open No. 11-297339

### Disclosure of the Invention

In view of the above described conventional problems, an object of the present invention is to provide a solid oxide fuel cell which is capable of preferably maintaining the electric conductivity between power generation cells even for a long period of use, by improving the high temperature oxidation resistance of the fuel electrode side surface of the metal separator.

That is, the solid oxide fuel cell according to the present invention is featured in that in a flat plate stacked type solid oxide fuel cell in which a fuel electrode layer and an oxidant electrode layer are respectively arranged on both sides of a solid electrolyte layer, and in which a metal separator is arranged on the outside of each of the fuel electrode layer and the oxidant electrode layer, a protective plate having more excellent high temperature oxidation resistance than that of the metal separator is joined on the fuel electrode layer side surface of the metal separator.

In the above described solid oxide fuel cell, the separator and the protective plate are joined to each other by diffusion joining, or the like.

The separator is configured, for example, by laminating a plurality of metal plates. The plurality of metal plates are diffusion joined to each other, and the metal plate is diffusion joined to the protective plate. Thereby, the plurality of metal plates and the protective plate are integrated together.

Further, the protection plate is made of, for example, Ni or Cu.

Further, the metal separator is made of, for example, a heat-resistant alloy of an Fe-base alloy, and nickel plating and/or Ag plating is applied to the surface of the metal separator.

In the solid oxide fuel cell according to the present invention, the protective plate having excellent high temperature oxidation resistance is joined to the fuel electrode layer side surface of the separator, and hence there is no possibility that the fuel gas enters into the joined portion of the members. Thus, the separator is surely protected from the fuel electrode atmosphere by the protection plate, so that the excellent electric conductivity can be maintained even in a long period of use. As a result, it is possible to realize a solid oxide fuel cell which has a long lifetime, and the performance of which is not deteriorated even in a long period of use.

In particular, according to the present invention, the separator and the protective plate are diffusion joined to each other. Thus, it is possible to surely secure excellent airtightness in the joined portion between the members. Also, the high joining strength of the joined portion prevents the protective plate from being separated even in a high temperature atmosphere. As a result, the separator is surely protected from the fuel electrode atmosphere by the protective plate, so that the excellent electric conductivity can be maintained even in a long period of use.

Further, even when the separator has the multilayer structure configured by the plurality of metal plates, the plurality of metal plates and the protective plate are integrally joined by diffusion joining. Thus, it is possible to easily manufacture the separator having excellent high temperature oxidation resistance.

Further, as in the present invention, when the protective plate is made of Ni and Cu, the separator is surely protected from the high temperature and high humidity fuel electrode atmosphere because of the excellent high temperature oxidation resistance of Ni and Cu. Thus, the separator is enabled to maintain the excellent electric conductivity even in a long period of use.

Further, as in the present invention, the high temperature oxidation resistance of the separator itself can be further improved by applying Ni plating and/or Ag plating to the surface of the separator, in addition to the above described arrangement of the protective plate.

### Brief Description of the Drawings

Figure 1 shows a configuration of a major portion of a solid oxide fuel cell according to the present invention;
Figure 2 is a sectional view showing a configuration example of the separator in Figure 1;
Figure 3 is a view showing an appearance of the separator; and
Figure 4 is a sectional view showing a configuration example of a separator different from that shown in Figure 2.

### Description of Symbols

- 1: Solid oxide fuel cell (fuel cell stack)
- 2: Solid electrolyte layer
- 3: Fuel electrode layer
- 4: Oxidant electrode layer
- 8: Separator
- 20: Protective plate

### Best Mode for Carrying Out the Invention

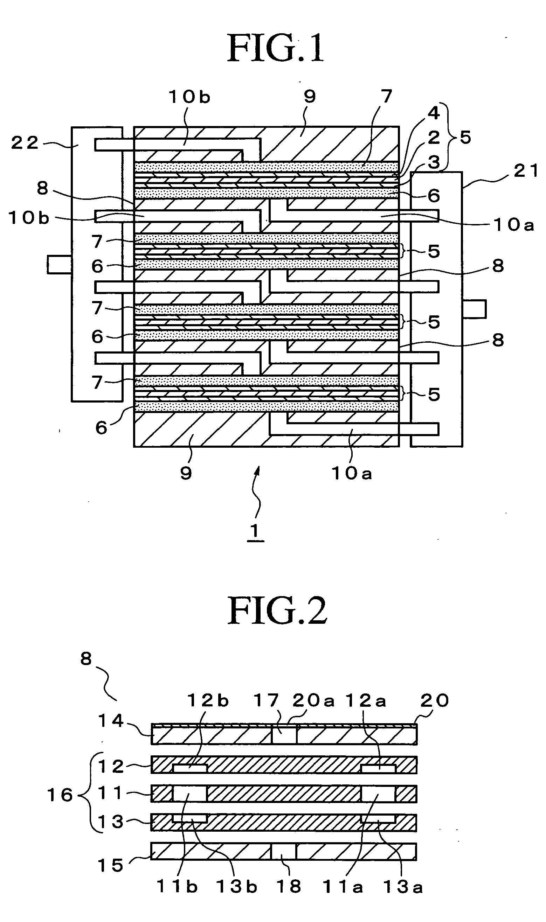

In the following, embodiments according to the present invention will be described with reference to Figure 1 to Figure 4.

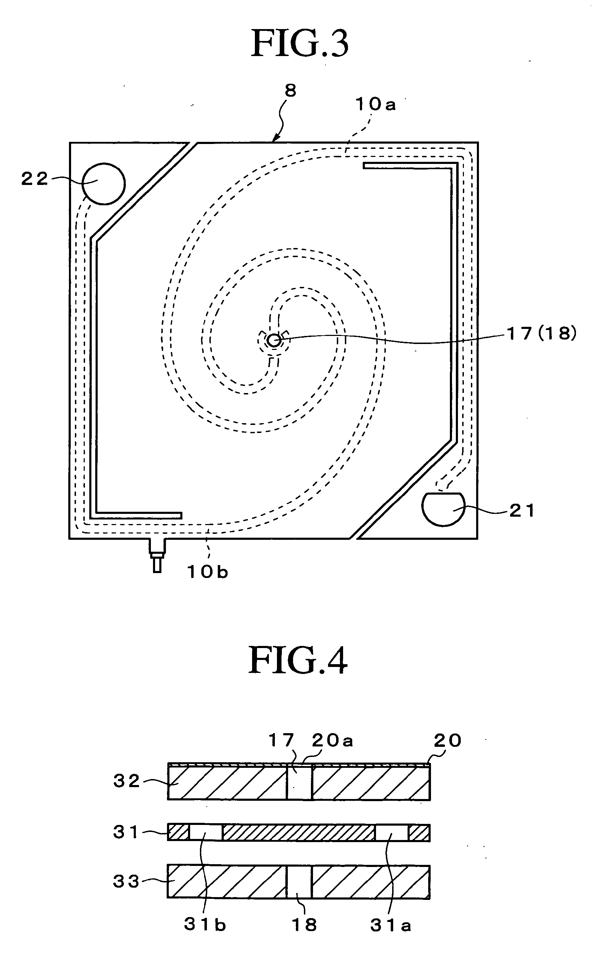

Figure 1 shows a configuration of a solid oxide fuel cell (fuel cell stack) according to the present invention. Figure 2 and Figure 4 show configuration examples of the separator in Figure 1. Figure 3 shows an appearance of the separator.

As shown in Figure 1, a fuel cell stack 1 according to the present embodiment is configured by stacking, in order, a power generation cell 5 in which a fuel electrode layer 3 and an air electrode layer 4 are respectively arranged on both sides of a solid electrolyte layer 2, a fuel electrode current collector 6 provided on the outside of the fuel electrode layer 3, an air electrode current collector 7 provided on the outside of the air electrode layer 4, and a separator 8 provided on the outside of each of the current collectors 6 and 7 (the uppermost and lowermost separators are end plates 9).

The solid electrolyte layer 2 is formed of stabilized zirconia (YSZ) obtained by adding yttria, and the like. The fuel electrode layer 3 is formed of a metal such as Ni or a cermet such as Ni-YSZ. The air electrode layer 4 is formed of LaMnO₃, LaCoO₃, and the like. The fuel electrode current collector 6 is configured by a sponge-like porous sintered metal plate made of Ni, and the like. The air electrode current collector 7 is configured by a sponge-like porous sintered metal plate made of Ag, and the like.

The separator 8 has a function to electrically connect between the power generation cells 5, and hence is required to have excellent electric conductivity. Thus, for the separator, there is used, for example, an Fe-base alloy such as SUS430 which is excellent in mechanical strength, corrosion resistance, temperature resistance, and the like. In the inside of the separator 8, there are formed a fuel gas passage 10a through which fuel gas is introduced from a fuel manifold 21 and discharged from the surface facing the fuel electrode layer 3, and an oxidant gas passage 10b through which the air as oxidant gas is introduced from an oxidant manifold 22 and discharged from the surface facing the air electrode layer 4.
However, as shown in Figure 1, one of the end plates 9 on the both ends has only the fuel gas passage 10a, and the other of the end plates 9 has only the oxidant gas passage 10b.

The separator 8 according to the present embodiment has, for example as shown in Figure 2, a five-layer structure comprising: an inner metal plate 16 which is formed of an upper plate 12, a middle plate 11 and a lower plate 13; and upper and lower outer metal plates 14 and 15 stacked on the outsides of the inner plate 16. As each of the metal plates 11 to 15, there is used a quadrangular metal plate (for example, SUS430) having a thickness of about 0.5 mm.

In the inner metal plate 16, recessed grooves 12a and 12b are provided on the upper plate 12, groove holes 11a and 11b are provided in the middle plate 11, and recessed grooves 13a and 13b are provided on the lower plate 13. By laminating the upper plate 12, the middle plate 11, and the lower plate 13, it is configured such that the fuel gas passage 10a as shown in Figure 1 is formed of the recessed groove 12a, the groove hole 11a, and the recessed groove 13a which correspond to each other, and that the oxidant gas passage 10b is formed of the recessed groove 12b, the groove hole 11b, and the recessed groove 13b which correspond to each other.
Further, a fuel gas discharge port 17 which communicates with the end of the fuel gas passage 10a is provided in the central portion of the outer metal plate 14, and an oxidant gas discharge port 18 which communicates with the end of the oxidant gas passage 10b is provided in the central portion of the outer metal plate 15.

Further, the plurality of metal plates 11 to 15 are joined together and integrated, so as to configure a quadrangular separator 8 in which the spiral fuel gas passage 10a and the spiral oxidant gas passage 10b are provided as shown in Figure 3.

Further, in the present embodiment, a protective plate 20 having more excellent high temperature oxidation resistance than that of the separator 8 is joined by diffusion joining to the outer metal plate 14, in such a state where the protective plate 20 overlaps and covers the upper surface of the outer metal plate 14 which is the surface of each separator 8 on the fuel electrode current collector 6 side. The protective plate 20 can be formed of Ni or Cu. The thickness of the protective plate 20 is preferably set to 0.01 to 0.5 mm. In the present embodiment, the protective plate 20 having a thickness of about 0.1 mm is used for the outer metal plate 14 having a thickness of about 0.5 mm.
Further, a through hole 20a which communicates with the fuel gas discharge port 17 of the outer metal plate 14 is provided substantially in the central portion of the protective plate 20 so that the fuel gas introduced into the fuel gas passage 10a of the separator 8 can be introduced to the side of the fuel electrode current collector 6 via the through hole 20a.

Here, the above described diffusion joining is a joining method in which respective members are heated and pressed so that an alloy layer (diffusion layer) of the members is formed between the joining surfaces of the members to thereby integrate (join) the members. By the diffusion joining, it is possible to reliably join the members, that is, to reliably join the outer metal plate 14 with the protective plate 20, and possible to obtain excellent airtightness in the joined portion. Thus, there is no possibility that the fuel gas enters into the joined portion in high temperature fuel electrode atmosphere. Further, the high joining strength of the joined portion prevents the protective plate 20 from being separated.

In addition, since Ni and Cu forming the protective plate 20 have highly excellent oxidation resistance in the high temperature and high humidity fuel electrode atmosphere, the separator 8 is surely protected from the fuel electrode atmosphere by the protective plate 20, and the growth of the high temperature oxidation film is prevented. Thereby, the separator 8 can be maintained to always have excellent electric conductivity. As a result, it is possible to realize a solid oxide fuel cell which has a long lifetime, and the performance of which is not deteriorated even in a long period of use. Further, the Ni plate and Cu plate can be supplied at low cost as compared with a plating layer, and hence it is possible to reduce the cost.

In particular, the Ni plate and the SUS plate have substantially a same diffusion temperature. Thus, in the case of the multilayer structure in which the separator 8 is configured by the plurality of metal plates 11 to 15 as in the above described embodiment, for example, when the Ni plate is used as the protective plate 20, the plurality of metal plates 11 to 15 and the protective plate 20 made of Ni can be simultaneously joined and integrated together by diffusion joining. Thereby, it is possible to easily manufacture the separator 8 which has a multilayer structure and excellent high temperature oxidation resistance. Further, the metal plates 11 to 15 are also surely joined to each other by diffusion joining, so that it is possible to obtain excellent airtightness and strong joining property in each joined portion.

As described above, the separator 8 according to the present embodiment has the five layer structure which is configured by respectively arranging the upper and lower outer metal plates 14 and 15 on the outsides of the inner metal plate 16 formed of the plurality of metal plates of the upper plate 12, the middle plate 11 and the lower plate 13. However, the separator 8 may of course have a three layer structure configured by an upper plate 32, a middle plate 31 and a lower plate 33 as shown in Figure 4.
In Figure 4, groove holes 31a and 31b are provided in the middle plate 31, and the fuel gas discharge port 17 which communicates with the end of the fuel gas passage 10a is provided in the central portion of the upper plate 32. Further, the oxidant gas discharge port 18 which communicates with the end of the oxidant gas passage 10b is provided in the central portion of the lower plate 33. Similarly to Figure 2, the protective plate 20 is also joined to the upper plate 32 by diffusion joining. Note that the upper plate 32 and the lower plate 33 have a thickness of about 1 mm, the middle plate 31 has a thickness of about 0.5 mm, and the protective plate 20 has, for example, a thickness of about 0.1 mm.

Further, it is of course possible to configure the separator 8 by a single plate. However, in the case where the separator 8 is configured to have the multilayer structure of the plurality of thin metal plates as described above, the reaction gas inner flow passages 10a and 10b having a complicated form, such as the spiral form, can also be comparatively easily formed. Thus, the separator 8 configured as described above has advantages that the manufacturing cost thereof can be reduced and that the separator 8 itself can be made thin and reduced in weight.

Further, when Ni plating and silver plating are applied to the separator 8 itself, or when Ni plating or silver plating is applied to the separator 8 itself, the high temperature oxidation resistance of the separator itself can be improved. This is preferred because more excellent electric conductivity is secured.

### Industrial Applicability

As described above, according to the present invention, it is configured such that the protective plate having excellent high temperature oxidation resistance is joined to the fuel electrode layer side surface of the separator by diffusion joining. This makes it possible to improve the high temperature oxidation resistance of the fuel electrode side surface of the metal separator. As a result, it is possible to provide a solid oxide fuel cell which has a long lifetime and which is capable of preferably maintaining the electric conductivity between the power generation cells even in a long period of use.

## Claims

1. A flat plate stacked type solid oxide fuel cell having a solid electrolyte layer, a fuel electrode layer arranged on one surface of the solid electrolyte layer, an oxidant electrode layer arranged on the other surface of the solid electrolyte layer, and a metal separator arranged on the outside of each of the fuel electrode layer and the oxidant electrode layer,
wherein a protective plate, which has more excellent high temperature oxidation resistance as compared with the metal separator, is joined to the surface on the fuel electrode layer side of the metal separator.

2. The solid oxide fuel cell according to claim 1, wherein the protective plate is joined to the separator by diffusion joining.

3. The solid oxide fuel cell according to claim 1, wherein the separator is configured by laminating a plurality of metal plates, and wherein the plurality of metal plates are diffusion joined to each other and the metal plate is diffusion joined to the protective plate, and thereby the metal plates and the protective plate are integrated together.

4. The solid oxide fuel cell according to claim 1, wherein the protective plate is made of Ni or Cu.

5. The solid oxide fuel cell according to claim 1, wherein the metal separator is made of a heat-resistant alloy of a Fe-base alloy, and Ni plating and/or Ag plating is applied to the surface of the metal separator.
